# FASCICULE DE BREVET EUROPEEN

(11) **EP 0 630 799 B1**
(45) Date de publication et mention de la délivrance du brevet: **21.05.1997**
(21) Numéro de dépôt: 94401371.3
(22) Date de dépôt: 17.06.1994
(51) Int. Cl.: B62D 1/26

(54) **Train de roulement pour véhicule circulant sur une voie de guidage**
Fahrwerk für ein an Leitschienen geführtes Fahrzeug
Running gear for a vehicle travelling along guided tracks

(30) Priorité: 21.06.1993 FR 9307474
(43) Date de publication de la demande: 28.12.1994
(73) Titulaire: MATRA TRANSPORT INTERNATIONAL, 75016 Paris (FR); VEVEY TECHNOLOGIES, CH-1844 Villeneuve (CH)
(72) Inventeur: Vincent-Genod, Bruno, F-92200 Neuilly sur Seine (FR)
(74) Mandataire: Loisel, Bertrand

(56) Documents cités:
- EP-A- 0 464 929
- EP-A- 0 465 411
- DE-A- 2 354 301
- FR-A- 2 675 105

## Description

La présente invention concerne les trains de roulement pour véhicules capables de circuler dans un sens ou dans l'autre sur une voie de guidage, et comportant au moins un train avant et un train arrière ayant chacun des roues porteuses orientables.

Elle concerne plus particulièrement un train de roulement du type ayant une paire de roues porteuses, orientables autour d'axes parallèles sur une partie fixe, et deux paires de roues de guidage pour l'appui latéral sur la voie, les paires de roues de guidage étant situées de part et d'autre des roues porteuses dans le sens de déplacement sur la voie, et étant portées par un même cadre de guidage déplaçable par rapport à la partie fixe, chaque roue de guidage étant montée sans liberté de translation sur le cadre de guidage, la partie fixe étant constituée par une poutre-caisson transversale placée au-dessus du cadre de guidage et munie de pivots d'orientation des roues porteuses placés au-dessous des coussins de suspension du véhicule sur le train de roulement.

On connaît déjà (FR-A-2 675 105) un train de roulement du type ci-dessus défini, dont la partie fixe est constituée par un pont moteur central supportant la caisse du véhicule par l'intermédiaire de bras latéraux et de coussins pneumatiques latéraux. Ce pont moteur reçoit la puissance motrice fournie par un moteur porté par la caisse du véhicule. Le cadre de guidage est déplaçable à la fois en rotation et en translation par rapport à la partie fixe. Les roues de guidage servent de palpeurs pour commander l'orientation des roues porteuses : la rotation du cadre de guidage fait braquer les roues porteuses pour les inscrire dans la direction de la voie, et la translation génère, par l'intermédiaire de cylindres hydrauliques, un surbraquage des roues porteuses destiné à compenser les efforts latéraux auxquels est soumis le véhicule. Les efforts latéraux sont donc repris par les roues porteuses et non par les roues de guidage. La faculté de translation du cadre de guidage impose l'utilisation des cylindriques hydrauliques et des commandes associées. Elle tend donc à compliquer la structure du train de roulement, ce qui apparaît comme indésirable dans le contexte du transport ferroviaire où les impératifs de sécurité sont particulièrement sévères.

Dans FR-A-2 639 596, il est décrit et représenté sur la figure 6 un train de roulement dans lequel le cadre de guidage peut seulement tourner par rapport à la partie fixe. Mais ce train de roulement comporte également des cylindres hydrauliques procurant une faculté de translation, ces cylindres hydrauliques étant installés entre le cadre et les roues de guidage. Il en résulte, comme le montre la figure 6 de ce document, que ce sont également les roues porteuses qui reprennent les efforts latéraux.

Un résultat recherché par l'invention est la réalisation d'un train simplifié et allégé grâce à une meilleure répartition des efforts. Pour cela il est proposé un train du type ci-dessus défini, dans lequel le cadre de guidage n'est déplaçable par rapport à la partie fixe que par rotation autour d'un axe vertical, et est relié aux roues porteuses par une tringlerie d'orientation forcée des roues porteuses.

Grâce à cette disposition, la partie fixe peut être sensiblement allégée. Elle pourra être réalisée en un matériau léger tel que l'aluminium. La liaison rotative entre le cadre de guidage et la poutre-caisson peut être constituée par une couronne à billes. On obtient une dissociation entre la reprise des efforts verticaux par les roues porteuses et la reprise des efforts latéraux par les roues et le cadre de guidage. Les roues porteuses ne peuvent que suivre la direction de la voie donnée par le cadre de guidage, et n'ont pas de pouvoir directeur compensant les efforts latéraux. Il en résulte une structure simplifiée du train de roulement.

L'invention propose également d'autre dispositions permettant également d'alléger le train, utilisées avantageusement en liaison avec la précédente, mais pouvant l'être indépendamment.

En particulier, chacune des roues porteuses peut être reliée, par l'intermédiaire d'un réducteur et d'un joint homocinétique, au rotor annulaire d'un moteur électrique de traction dont le stator est fixé à un flasque latéral supportant un des coussins pneumatiques latéraux et recevant le pivot d'orientation de ladite roue porteuse. Le rotor annulaire peut être relié au joint homocinétique par l'intermédiaire d'un arbre central traversant le stator et portant, à l'opposé de la roue porteuse, un disque de freinage. Les moteurs électriques peuvent notamment être des moteurs polyphasés dont le rotor est à aimants permanents, ce qui évite la nécessité de liaisons électriques par collecteur ou bague rotative.

Dans le cas où la partie fixe est constituée par une poutre-caisson, les flasques appartiennent à cette poutre et les moteurs sont avantageusement placés dans la poutre, dans laquelle sont ménagées des ouvertures de passage d'air de ventilation des disques de frein et de ventilation du moteur.

Un avantage supplémentaire d'un train de roulement comportant un moteur pour chaque roue porteuse et motrice est la réduction des moments à transmettre par les roues de guidage et le cadre en cas de blocage d'une roue porteuse. Dans le cas en effet où les deux roues sont entraînées à partir d'un même moteur électrique par l'intermédiaire d'un pont moteur, l'ensemble du couple du moteur est appliqué à la roue restante en cas de blocage de l'autre.

L'invention sera mieux comprise à la lecture de la description qui suit d'un mode particulier de réalisation, donné à titre d'exemple non-limitatif. La description se réfère aux dessins qui l'accompagnent, dans lesquels :
- la figure 1 est une vue en perspective d'un train moteur suivant l'invention, utilisable notamment sur un véhicule de transport à conduite automatique, certains des éléments non directement concernés par l'invention ainsi qu'une des roues porteuses étant omis pour plus de clarté ;
- la figure 2 est une vue de dessus du train de roulement de la figure 1 ;
- la figure 3 est une vue de face du train de la figure 1, suivant la direction f₀ indiquée à la figure 1 ;
- la figure 4 est une vue éclatée destinée à montrer les composants placés dans la poutre-caisson ;
- la figure 5 est une vue en perspective de la poutre-caisson assemblée ; et
- la figure 6 est une vue partielle en coupe axiale de la poutre-caisson.

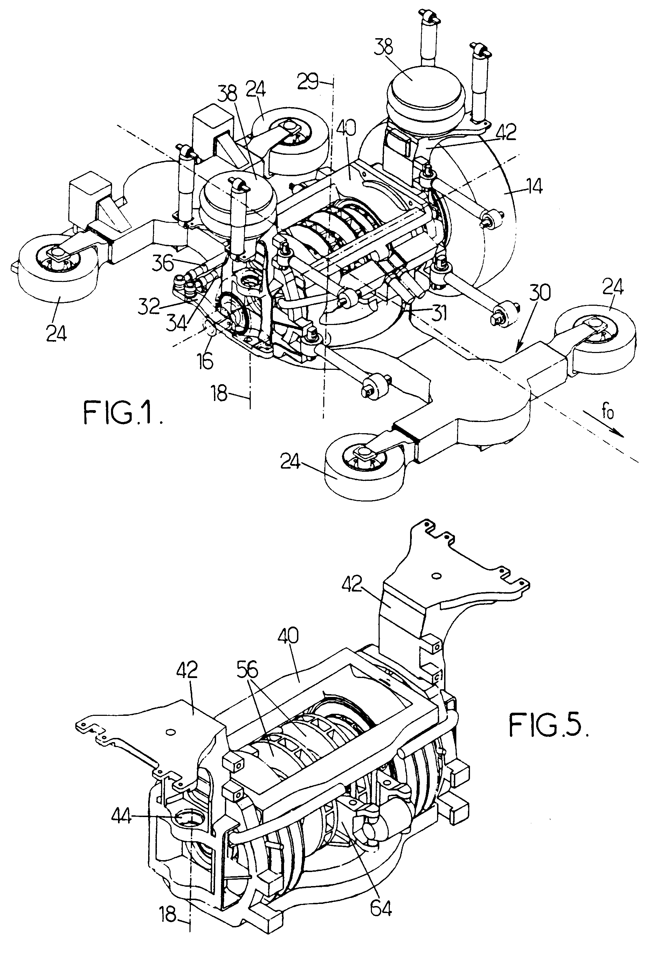

Le train de roulement montré en figures 1 à 3 est notamment utilisable sur un véhicule muni de deux trains de roulement du genre décrit dans le document FR-A-2 639 596 ou FR-A-2 675 105. Le train comporte deux roues porteuses et motrices 14, dont une seule est représentée, portées chacune par un moyeu de roue 16 qui est orientable autour d'un axe respectif 18 sur une partie fixe. Les roues sont destinées à rouler sur une voie et en général équipées de pneumatiques dont l'effet directeur est nettement plus élevé que celui de roues métalliques.

L'orientation des roues porteuses et motrices 14 est commandée par l'appui de quatre roues de guidage 24 sur des rails (non représentés) appartenant à la voie.

Les deux paires de roues de guidage 24 sont situées de part et d'autre des roues porteuses 14 relativement au sens f₀ de déplacement sur la voie. Elles sont portées par un cadre de guidage 30 situé sous la partie fixe du train de roulement, et pouvant se déplacer en rotation par rapport à la partie fixe autour d'un axe vertical médian 29. Ce cadre est en forme de H dont la barre transversale est supportée par la partie fixe par l'intermédiaire de moyens tels qu'une couronne à billes 31 définissant l'axe 29.

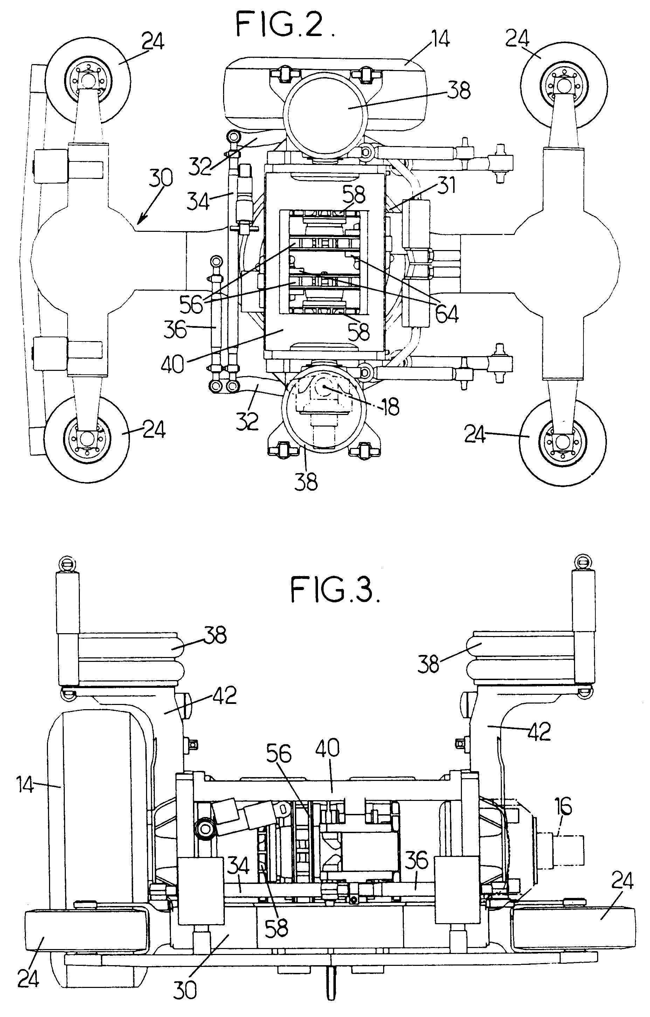

Le moyeu 16 de chaque roue porteuse tourne dans la bague externe d'un palier qui est elle-même mobile en rotation autour de l'axe vertical d'orientation 18, et à laquelle est fixé un bras d'orientation 32. Une bielle de liaison 36 (figure 2) a ses extrémités articulées respectivement sur la barre transversale du cadre en H 30 et sur l'extrémité du bras 32 d'articulation d'une des roues porteuses. Une bielle de conjugaison 34 a ses extrémités articulées respectivement sur les extrémités des deux bras d'orientation 32. Les bras 32 et les bielles 34, 36 constituent une tringlerie qui force l'orientation des roues porteuses 14 pour qu'elles s'alignent avec la direction imposée par les roues de guidage 24.

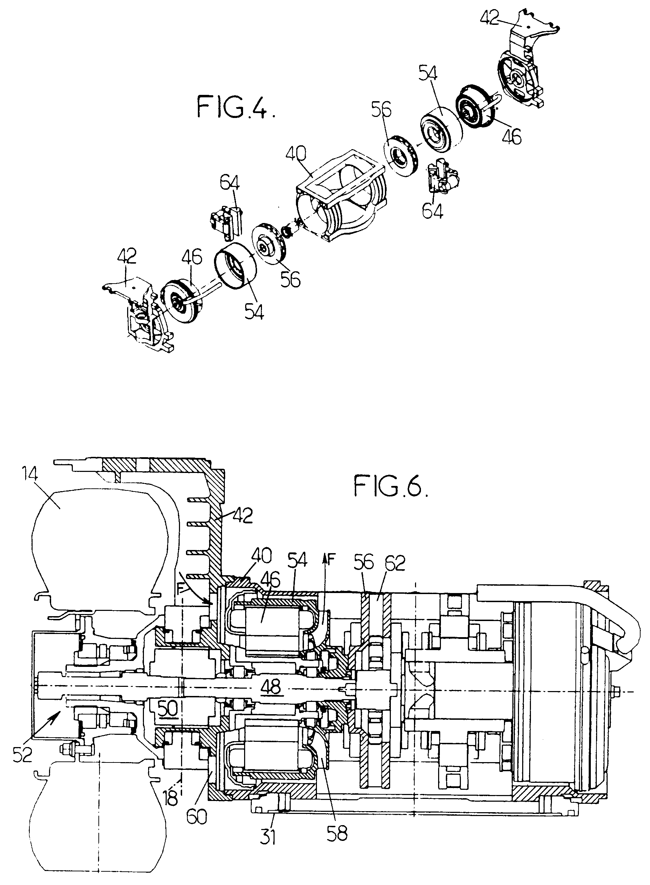

La partie fixe du train de roulement supporte le poids du véhicule par l'intermédiaire de coussins de suspension 38. Elle est constituée par une poutre-caisson transversale qui est composée d'un caisson central 40 s'étendant transversalement entre les deux roues porteuses 14, et de deux flasques latéraux 42 fixés aux extrémités du caisson 40. Le caisson 40 est constitué de traverses reliées entre elles à leurs extrémités, entre lesquelles l'air ambiant peut circuler. Chaque flasque 42 est en forme générale d'équerre dont une partie verticale occupe l'extrémité du caisson 40 et comporte, sur sa face extérieure, le pivot 44 d'orientation de la roue porteuse correspondante, ce pivot 44 définissant l'axe d'orientation 18 (figure 5). L'autre partie du flasque en équerre s'étend vers l'extérieur au-dessus du caisson 40 et reçoit un coussin 38 sur sa face supérieure. Cet agencement assure que les pivots 44 soient placés au-dessous des coussins, de sorte que le poids du véhicule, au lieu d'être principalement transmis par la zone centrale de poutre, passe de façon relativement directe des coussins aux roues.

La poutre-caisson sert aussi à recevoir les moteurs d'entraînement des roues. Chaque roue porteuse 14 est entraînée par un moteur électrique polyphasé propre qui est logé dans la caisson transversal 40, selon un agencement illustré aux figures 4 à 6. Pour que la figure 6 reste claire, on n'y a hachuré que des éléments appartenant à la poutre-caisson, au rotor ou au disque de frein.

Chaque moteur comprend un stator 46 portant des bobinages inducteurs, et fixé au flasque 42 adjacent à la roue porteuse correspondante par des vis non représentées. Le stator 46 est traversé par un arbre central 48 (non représenté à la figure 4, mais visible à la figure 6) ayant une extrémité couplée à la roue 14 par l'intermédiaire d'un joint homocinétique 50 et d'un réducteur 52, et une extrémité opposée sur laquelle sont fixés le rotor 54 du moteur et un disque de frein 56. Le rotor 54 est de forme générale annulaire et porte des aimants permanents coopérant avec les bobinages du stator pour fournir le couple d'entraînement de la roue.

Entre la partir annulaire et le moyeu de fixation du rotor sur l'arbre 48, sont ménagées des ouvertures 58 autorisant une circulation d'air assurant un refroidissement du moteur. L'air de refroidissement peut circuler comme l'indiquent les flèches F à la figure 6. Il pénètre par des ouvertures 60 ménagées dans le flasque 42 en regard de passages d'air prévus dans le stator 46, puis est entraîné à travers les ouvertures 58 du rotor pour sortir à travers les ouvertures laissées libres entre les traverses formant le caisson 40 (voir aussi les figures 2 et 3). Le disque de frein 56, qui comporte également des ailettes de refroidissement 62, est situé à l'opposé de la roue 14 sur l'arbre 48. Il coopère avec des patins de freinage 64 montés sur la poutre-caisson.

## Revendications

1. Train de roulement pour véhicule destiné à circuler sur une voie de guidage, ayant une paire de roues porteuses (14) d'appui sur la voie, orientables autour d'axes parallèles (18) sur une partie fixe, et deux paires de roues de guidage (24) pour l'appui latéral sur la voie, les paires de roues de guidage étant situées de part et d'autres des roues porteuses, et étant portées par un même cadre de guidage (30) déplaçable par rapport à la partie fixe, chaque roue de guidage (24) étant montée sans liberté de translation sur le cadre de guidage (30), la partie fixe étant constituée par une poutre-caisson transversale (40,42) placée au-dessus du cadre de guidage (30) et munie de pivots (44) d'orientation des roues porteuses placés au-dessous des coussins (38) de suspension du véhicule sur le train de roulement,
caractérisé en ce que le cadre de guidage n'est déplaçable par rapport à la partie fixe que par rotation autour d'un axe vertical (29), et est relié aux roues porteuses par une tringlerie (32,34,36) d'orientation forcée des roues porteuses.

2. Train de roulement selon la revendication 1, caractérisé en ce que chacune des roues porteuses (14) est reliée, par l'intermédiaire d'un réducteur (52) et d'un joint homocinétique (50), au rotor annulaire (54) d'un moteur électrique de traction dont le stator (46) est fixé à un flasque latéral (42) supportant un des coussins pneumatiques latéraux (38) et recevant le pivot (44) d'orientation de ladite roue porteuse.

3. Train de roulement selon la revendication 2, caractérisé en ce que ledit rotor annulaire (54) est relié au joint homocinétique (50) par l'intermédiaire d'un arbre central (48) traversant le stator (46) et portant, à l'opposé de la roue porteuse (14), un disque de freinage (56).

4. Train de roulement selon la revendication 2 ou 3, caractérisé en ce que les moteurs électriques sont des moteurs polyphasés à rotor à aimants permanents.

5. Train de roulement selon la revendication 2, 3 ou 4, caractérisé en ce que les moteurs sont placés dans la poutre (40,42), dans laquelle sont ménagées des ouvertures (60) de passage d'air de ventilation.

6. Train de roulement selon l'une quelconque des revendications 2 à 5, caractérisé en ce que lesdits flasques (42) appartiennent à la poutre.

7. Train de roulement selon l'une quelconque des revendications précédentes, caractérisé en ce que le cadre de guidage (30) est en forme de H dont la barre transversale est suspendue à la poutre (40,42) par une couronne à billes (31).

8. Train de roulement selon la revendication 7, caractérisé en ce que la barre transversale est reliée à un bras d'orientation (32) d'une des roues porteuses par une bielle (36) articulée à ses extrémités.

9. Train de roulement selon l'une quelconque des revendications précédentes, caractérisé en ce que la tringlerie d'orientation forcée comprend une bielle (36) de liaison entre le cadre de guidage (30) et une roue porteuse, et une bielle de conjugaison entre les deux roues porteuses.

## Claims

1. A wheel set for a vehicle designed to travel on a guide track, having a pair of load-carrying wheels (14), steerable about parallel axes (18) relative to a fixed portion, and two pairs of guide wheels (24) for bearing laterally against the track, the pairs of guide wheels being situated on either side of the load-carrying wheels, and being carried by a common guide frame (30) that is displaceable relative to the fixed portion, each guide wheel (24) being mounted without any freedom of translation on the guide frame (30), the fixed portion being constituted by a transverse box girder (40,42) placed above the guide frame (30) and provided with steering pivots (44) for the load-carrying wheels, which pivots are placed beneath cushions (38) providing suspension for the vehicule on the wheel set,
characterized in that the guide frame is displaceable relative to the fixed portion only in rotation about a vertical axis (29), and is connected to the load-carrying wheels by a linkage (32,34,36) for forced steering of the load carrying wheels.

2. A wheel set according to claim 1, characterized in that each of the load-carrying wheels (14) is connected via a stepdown gear box (52) and a constant velocity joint (50) to the annular rotor (54) of an electric traction motor whose stator (46) is fixed to a lateral flange (42) supporting one of the lateral pneumatic cushions (38) and receiving the steering pivot (44) of said load-carrying wheel.

3. A wheel set according to claim 2, characterized in that said annular rotor (54) is connected to the constant velocity joint (50) via a central shaft (48) passing through the stator (46) and carrying a disk brake (54) on its end opposite to the load-carrying wheel (14).

4. A wheel set according to claim 2 or 3, characterized in that the electric motors are polyphase motors having permanent-magnet rotors.

5. A wheel set according to claim 2, 3 or 4, characterized in that the motors are placed inside the girder (40,42), which has openings (60) formed therein to allow ventilation air to pass.

6. A wheel set according to any one of claims 2 to 5, characterized in that said flanges (42) belong to the girder.

7. A wheel set according to any one of the preceding claims, characterized in that the guide frame (30) is H-shaped with the cross-bar of the H-shape being suspended from the girder (40,42) by a ball-bearing ring (31).

8. A wheel set according to claim 7, characterized in that the cross-bar is connected to a steering arm (32) for a load-carrying wheel via a link (36) which is hinged at both ends.

9. A wheel set according to any one of the precedings claims, characterized in that the forced steering linkage includes a link (36) providing a connection between the guide frame (30) and a load-carrying wheel, and also a conjugating link between the two load-carrying wheels.

## Patentansprüche

1. Fahrwerk für ein an Leitschienen geführtes Fahrzeug mit einem Paar von Tragrollen (14) zur Abstützung auf der Schiene, die um parrallele Achsen (18) an einem festen Teil ausrichtbar sind, und zwei Paare von Führungsrollen (24) zur seitlichen Abstützung an der Schiene, wobei die Paare an Führungsrollen zu beiden Seiten der Tragrollen angeordnet sind, und auf einem gemeinsamen Führungsrahmen (30), der im Verhältnis zu dem festen Teil bewegbar ist, abgestützt sind, wobei jede Führungsrolle (24) ohne Translationsfreiheit an dem Führungsrahmen (30) befestigt ist, das feste Teil durch einen Querbalkenkasten (40, 42) gebildet ist, der oberhalb des Führungsrahmans (30) plaziert ist, und mit Drehachsen (44) zur Orientierung der Tragrollen versehen ist, die unterhalb der Federung (38) der Aufhängung des Fahrzeugs auf dem Fahrwerk plaziert sind,
**dadurch gekennzeichnet, daß** der Führungsrahmen im Verhältnis zu dem festen Teil außer der Rotation um eine vertikale Achse (29) nicht bewegbar angeordnet ist und mit den Tragrollen über ein Gestänge (32, 34, 36) zur erzwungenen Ausrichtung der Tragrollen verbunden ist.

2. Fahrwerk nach Anspruch 1, **dadurch gekennzeichnet, daß** jede Tragrolle (14) über die Zwischenschaltung eines Untersetzgetriebes (52) und einer homokinetischen Verbindungsstelle (50) mit einem ringförmigen Rottor (54) eines elektrischen Zugmotors verbunden ist, dessen Stator (46) an einem seitlichen Flansch (42) befestigt ist, der eine der seitlichen pneumatischen Federungen (38) trägt und in dem die Drehachse (44) zur Ausrichtung der Tragrollen aufgenommen ist.

3. Fahrwerk nach Anspruch 2, **dadurch gekennzeichnet, daß** der ringförmige Rotor (54) mit der homokinetischen Verbindungsstelle (50) über die Zwischenschaltung einer zentralen Achse (48) durch den Stator (46) verbunden ist und an der gegenüberliegenden Seite zu den Tragrollen (14) eine Bremsscheibe (56) trägt.

4. Fahrwerk nach Anspruch 2 oder 3, **dadurch gekennzeichnet, daß** die elektrischen Motore mehrphasige Motore zur Drehung um Permanentmagnete sind.

5. Fahrwerk nach Anspruch 2, 3 oder 4, **dadurch gekennzeichnet, daß** die Motoren in dem Kasten (40, 42) angeordnet sind, dem Öffnungen (60) zum Durchfluß von Belüftungsluft ausgespart sind.

6. Fahrwerk nach einem der Ansprüche 2 bis 5, **dadurch gekennzeichnet, daß** die Flansche (42) zu dem Kasten gehören.

7. Fahrwerk nach einem der vorangegangenen Ansprüche, **dadurch gekennzeichnet, daß** der Führungsrahmen die Form eines 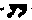 H" besitzt, dessen Querbalken an dem Kasten (40, 42) über einen Zahnkranz (31) aufgehängt ist.

8. Fahrwerk nach Anspruch 7, **dadurch gekennzeichnet, daß** der Querbalken mit einem Arm (32) zur Ausrichtung von einer der Tragrollen über ein Zwischenglied (36), das gelenkig an seinem Ende angeordnet ist, verbunden ist.

9. Fahrwerk nach einem der vorhergehenden Ansprüche, **dadurch gekennzeichnet, daß** das Gestänge zur erzwungenen Ausrichtung ein Zwischenteil (36) zwischen dem Führungsrahmen (30) und einer Tragrolle, und ein Einkopplungsstück zwischen zwei Tragrollen aufweist.
